(19) Europäisches Patentamt
European Patent Office
Office européen des brevets

(11) **EP 2 786 366 B1**

(12) **EUROPEAN PATENT SPECIFICATION**

(45) Date of publication and mention
of the grant of the patent:
**11.04.2018 Bulletin 2018/15**

(21) Application number: **12780695.8**

(22) Date of filing: **17.10.2012**

(51) Int Cl.:
*H04N 13/04* (2006.01)   *G09G 3/36* (2006.01)
*G09G 3/34* (2006.01)

(86) International application number:
**PCT/EP2012/070530**

(87) International publication number:
**WO 2013/079253 (06.06.2013 Gazette 2013/23)**

(54) **APPARATUS FOR DRIVING A DISPLAY**

VORRICHTUNG ZUR ANSTEUERUNG EINER ANZEIGE

APPAREIL D'ATTAQUE DE DISPOSITIF D'AFFICHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2011 US 201161565034 P**

(43) Date of publication of application:
**08.10.2014 Bulletin 2014/41**

(73) Proprietor: **TP Vision Holding B.V.**
**1097 JB Amsterdam (NL)**

(72) Inventor: **DE GREEF, Pierre**
**1097 JB Amsterdam (NL)**

(74) Representative: **DREISS Patentanwälte PartG
mbB**
**Postfach 10 37 62**
**70032 Stuttgart (DE)**

(56) References cited:
**EP-A1- 0 604 930      WO-A1-94/09475
US-A1- 2005 122 305   US-A1- 2011 069 092
US-A1- 2011 304 709**

## Description

FIELD OF THE INVENTION

The invention relates to a display drive apparatus and a method of driving a display, and in particular, but not exclusively to driving of displays for presentation of three dimensional images.

BACKGROUND OF THE INVENTION

In order to provide a smooth user experience, it is desirable for displays for video images to provide a high frame rate. However, in order to provide high image quality, it is required that the displays are able to update the presented images sufficiently fast to avoid cross-talk between sequential images. This is particularly important for three dimensional (3D) displays where different views are presented time sequentially. In such displays crosstalk will not only be temporal cross-talk but will also affect the three dimensional experience and may give rise to perceived ghost imaging.

3D televisions are currently being introduced in the low/mid-range market. In the 3D mode these sets have a limited 3D performance with the cross talk between the left and right images typically being the most significant image degradation.

Stereoscopic display systems using active shutter glasses are very attractive, as they do not compromise power efficiency and picture quality when used in a conventional two-dimensional viewing mode. In a 3D viewing mode, the left and right images are displayed as alternating fields with synchronized shutter glasses being used to separate the images for the viewer's left and right eye respectively. During the addressing of each new field, shutter glasses are used to block the light towards either or both the left and right eye. To reduce crosstalk between the images for the left and right eye and to reduce power consumption, the backlight is preferably turned off locally when the related image content is not to be transferred to the left or right eye. This is typically during the transition period of the shutter glasses and of the liquid crystal cells modulating the backlight.

In disparity areas of stereoscopic images, the left and right view will typically have very different content. The parallax at these locations results in the pixels of the Liquid Crystal (LC) panel being driven with substantially different values. Unfortunately the temporal optical response of LC-panels is relative slow which results in the change in transmittance values between the left and right images typically not being completed within the available time. This results in an interaction between the left and the right image and results in cross talk between the images that can be perceived by a user.

The same effects apply to color sequential display systems, resulting in interaction between the primary colored images that can be perceived as discoloring and desaturation.

Thus, when two subsequent images (or fields or frames) are displayed, crosstalk may occur between images providing e.g. a ghost image of one of the images in the other images. This is particularly disturbing for 3D imaging and many of the examples below will be illustrated by 3D video processing. However, it is remarked that the same crosstalk effects may also occur in normal two dimensional (2D) video imaging and the principles are not as such restricted to 3D imaging methods and devices. For 3D video, the effects are especially annoying since quite substantial effects are present and the ghosting effect strongly reduces the 3D impression.

To regulate the intensity of the backlight of a backlight display, it is known to adjust the backlight level using Pulse Width Modulation (PWM). In PWM methods the backlight is driven with a pulse width modulated signal, i.e. the backlight is periodically turned on and off. The pulse width of the PWM determines the intensity of the backlight. In simple set-ups the intensity of a single backlight for the display as a whole is pulse width modulated, in more sophisticated set-ups the backlighting is divided into several areas, and for each area the intensity is regulated by pulse width modulation. Pulse width modulation dimming of the intensity of the backlight can lead to substantial reduction in the overall consumption of energy, reducing the operating costs for the device and reducing the overall temperature of the device.

Pulse width modulation can also to some extent be used to provide crosstalk reduction. It is noted that cross talk occurs for several reasons: For adjacent image parts the modulated light intensity of the backlight for a bright image part may spill out into an adjacent dimmer image part. Furthermore, a bright pixel in one image may be followed by a darker pixel in the next image. However, it takes time for the LCD cell to shut so the "dark" pixel is not dark but dark grey. Likewise it takes some time for a LCD cell to open so a bright pixel in one image preceded by a dark pixel image, overall, have (with the same PWM settings) somewhat less light intensity than if preceded by a bright pixel. The crosstalk can be reduced by taking into account such effects in the video data and using an overdrive of the transmittance elements. If one knows or can calculate to a reasonable degree of certainty the amount of light that spills over from one pixel into the following or adjacent pixel, one can reduce the crosstalk by taking such spill-over effect into account in the video data.

Overdrive techniques seek to improve the picture quality by reducing the LC-response time. Specifically, the overdrive may provide a temporal high-pass filter to compensate for the physical low-pass behavior of the LC material. When a sub-pixel is driven from one level to another level, the driving signal is temporarily driven to another more extreme level to improve the LC-transition. As long as the high-passed signal is not clipped due to the limited available dynamic range, the addressed transmittance elements may in this way reach their new settings in a single address-cycle.

The basic goal of overdrive correction is to reach the required LC-transmission level before the pixels of the image are updated (by the next address cycle). In combination with a backlight the transmittance elements are exposed to relatively short light pulse with duty cycles of e.g. 25%. The average state of the LC during the exposure of the sub-pixel determines the perceived brightness of the pixel. By driving the transmittance elements to a value which is higher or lower that the constant value corresponding to the image data, a faster transition with an average transmittance during the backlight interval corresponding to the image data can be achieved.

However, although overdrive techniques can improve the image quality and in particular can reduce the temporal cross talk, it tends to provide suboptimal results in some scenarios. In particular, overdrive techniques typically do not remove all cross talk due to e.g. inaccuracies, varying operating characteristics, restrictions in the application of overdrive values etc.

Hence, an improved approach for driving a display would be advantageous and in particular an approach allowing increased flexibility, facilitated implementation, reduced cross talk, improved image quality and/or improved performance would be advantageous.

US 2005/0122305 A1 introduces a method of driving a liquid crystal display device that includes corrections based on pixel temperatures.

WO 94/09475 A1 introduces a method of driving a liquid crystal display device in colour sequential mode, that includes corrections for timing differences between different regions of the display and backlight.

SUMMARY OF THE INVENTION

Accordingly, the Invention seeks to preferably mitigate, alleviate or eliminate one or more of the above mentioned disadvantages singly or in any combination.

According to an aspect of the invention there is provided display drive apparatus for driving a display having a backlight and a transmittance panel comprising transmittance elements for modulating the light from the backlight, the display drive apparatus comprising: a receiver for receiving a plurality of time sequential frames to be displayed by the display, a display controller arranged to generate backlight intensity values for the backlight and transmittance drive values for the transmittance elements for the time sequential frames in response to image data for the time sequential frames and a global relationship between image data values and backlight intensity values and transmittance drive values, the transmittance drive values comprising a desired transmittance component and an overdrive component, a compensator for introducing a locally adapted overdrive compensation value to the transmittance drive values to generate compensated transmittance drive values, a backlight driver for driving the backlight in accordance with the backlight intensity values, and a transmittance panel driver for driving the transmittance panel in accordance with the compensated transmittance drives values, wherein the compensator is arranged to determine the locally adapted overdrive compensation value in response to a display position of a transmittance element for which the locally adapted overdrive compensation value is determined.

In an embodiment of the invention, the locally adapted overdrive compensation value is obtainable from a look-up table in response to an input of the display position of the transmittance element for which the locally adapted overdrive compensation value is determined.

The invention may provide improved image quality in many scenarios, and/or may facilitate implementation and/or reduce complexity. The approach may allow reduced cross-talk between sequential images. In particular, for time sequential three dimensional image displays, reduced cross-talk between left and right images may be achieved. The approach may in particular allow improved compensation and/or mitigation for delays in adaptation of the transmittance elements. A more accurate control of the light output of individual transmittance elements or pixels may be achieved in many embodiments.

The invention may allow facilitated implementation in many embodiments. In particular, improved accuracy and localized operation can be achieved while still allowing a generic relationship to be used for determining backlight and transmittance values. The approach may allow an efficient implementation in many scenarios and may in particular in many embodiments provide improved backwards compatibility as it allows low complexity of existing global systems to be easily modified to include local variations.

BRIEF DESCRIPTION OF THE DRAWINGS

Embodiments of the invention will be described, by way of example only, with reference to the drawings, in which

FIG. 1 is an illustration of examples of elements of a display system in accordance with some embodiments of the invention;
FIG. 2 illustrates an example of the timing of a driving of a blinking backlight;
FIG. 3 illustrates an example of a timing for addressing a display;
FIG. 4 and 5 illustrates an example of an overdrive approach for driving transmittance elements of a display;
FIG. 6 illustrates an example of the light output generated from a backlight display;
FIG. 7 is an illustration of examples of elements of a display system in accordance with some embodiments of the invention;
FIG. 8 illustrates an example of the timing for addressing a display;
FIG. 9 is an illustration of examples of elements of a display system in accordance with some embodiments of the invention;

FIG. 10 is an illustration of examples of elements of a display system in accordance with some embodiments of the invention;

FIG. 11 is an illustration of examples of elements of a display system in accordance with some embodiments of the invention;

FIG. 12 illustrates an example of timing for addressing a display;

FIG. 13 illustrates an example of an overdrive approach for driving transmittance elements of a display in accordance with some embodiments of the invention;

FIG. 14 illustrates an example of generation of transmittance drive values for driving transmittance elements of a display in accordance with some embodiments of the invention;

FIG. 15 illustrates an example of an operation of the approach of FIG. 14;

FIG. 16 illustrates an example of generation of transmittance drive values for driving transmittance elements of a display in accordance with some embodiments of the invention;

FIG. 17 illustrates an example of an operation of the approach of FIG. 16;

FIG. 18 illustrates an example of generation of transmittance drive values for driving transmittance elements of a display in accordance with some embodiments of the invention;

FIG. 19 illustrates an example of an operation of the approach of FIG. 18;

DETAILED DESCRIPTION OF SOME EMBODIMENTS OF THE INVENTION

The following description focuses on embodiments of the invention applicable to a display driver and display system for displaying three dimensional images by alternating between images for the viewer's eyes, i.e. to a time sequential stereoscopic display. However, it will be appreciated that the invention is not limited to this application but may be applied to many other display systems and applications including traditional two dimensional video sequences.

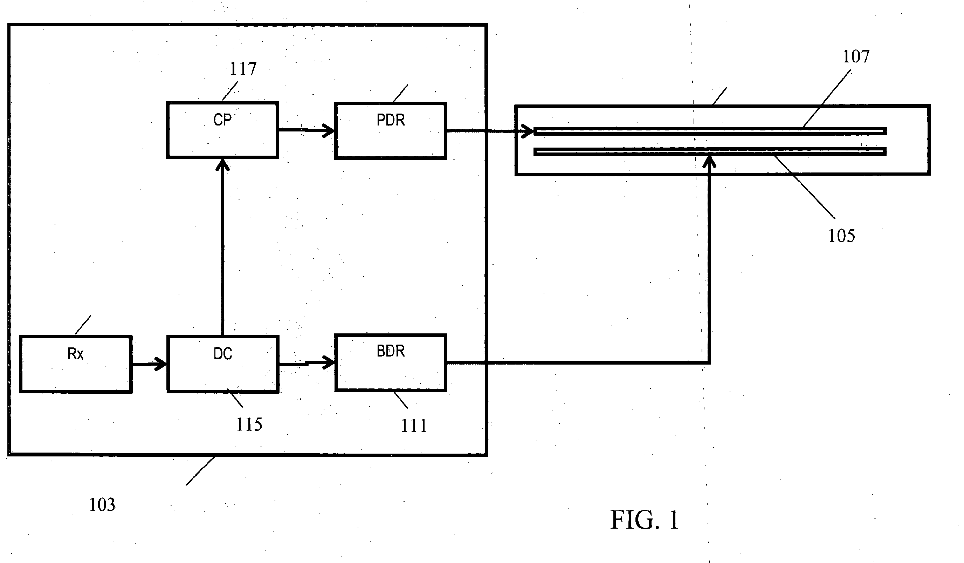

FIG. 1 illustrates an example of a display system in accordance with some embodiments of the invention. The display system comprises a display 101 driven by a display driver 103. It will be appreciated that although the display 101 and the display driver 103 are illustrated as separate functional blocks they may be integrated in the same device. Specifically, the display driver 103 and the display 101 may be implemented as a single display unit, such as e.g. a computer monitor, a video monitor, or a television.

The display 101 comprises a backlight 105 and a transmittance panel 107. The backlight 105 provides light which falls on the transmittance panel 107. The transmittance panel 107 comprises a number of transmittance elements, typically arranged as an array of elements. Each of transmittance elements modulate the light by a transmittance value that can be controlled by an electrical signal. Thus, the transmittance panel 107 can modulate the incident light from the backlight to change the light transmission of the individual transmittance element. Thus, each transmittance element corresponds to a pixel or sub-pixel (e.g. for color displays) of the display. This pixel modulation allows an image to be rendered. As a typical example, the transmittance panel 107 may be implemented using liquid crystal technology, and thus the display 101 may specifically be an LC display.

The transmittance panel 107 comprises a plurality of transmittance elements which are arranged in an array of N lines and M columns. Typically, the N lines will be horizontal lines and the columns will be vertical when the display is in use in a normal operational configuration. However, it will be appreciated that other arrangements are possible including arrangements where the lines are vertical and the columns are horizontal when in use.

The display driver 103 is arranged to present the frames by controlling the backlight 105 and the transmittance panel 107. Accordingly, the display driver 103 comprises a backlight driver 111 which drives the backlight 105 and a transmittance panel driver 113 which is arranged to drive the transmittance panel 107. The backlight driver 111 and the transmittance panel driver 113 coordinate to provide a backlight and transmittance values that result in the images of the frames being rendered by the display 101.

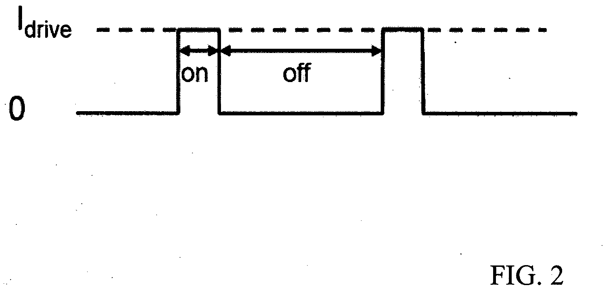

In the example, the display 101 presents the sequential images for the right and left eyes to provide a stereoscopic 3D effect. The backlight driver 111 is arranged to only switch the light on for part of the duration of each frame. Thus, the backlight is a pulsed or blinking backlight which is driven to only be switched on for part of the time. Thus, a backlight drive signal such as illustrated in FIG. 2 may be used.

The backlight driver 111 is furthermore arranged to drive shutter glasses synchronously with the backlight. Thus, the shutter glasses are driven such that the left eye shutter is open during (at least part) the backlight-on time interval for the left eye frame but off during the backlight-on time interval of the right eye frame, and vice versa for the right eye shutter. Thus, the display system is a field-sequential stereoscopic display system which alternates the rendering of the left and right images on the transmittance panel 107 with the backlight 105 synchronously exposing the images when the appropriate shutter glass is set to be transparent while the other shutter glass is set to be non-transparent.

One of the main issues impacting image quality in backlight displays is the delay in transitioning the transmittance elements from the transmittance value of the previous frame to the transmittance value required for the current frame. Indeed, in order to ensure that the frames are perceived as moving images, the frame rate must be sufficiently high, and typically a frame rate of at least 120 Hz is used for field-sequential stereoscopic display thereby providing a 3D image rate of at least 60 Hz. However, for e.g. LC transmittance elements, the transition time may be high compared to the relative high frame rate. Therefore, often the LC elements may not be able to transition sufficiently.

This may be particularly critical for field-sequential stereoscopic displays. Indeed, for stereoscopic images, the left and right views will have different content for objects positioned towards the front in order to provide a parallax creating a depth impression. However, as the temporal response of LC panels is relative slow, this causes an interaction between the left and the right image. This picture quality artifact is perceived by the viewer as left/right crosstalk and may e.g. give rise to the perception of ghost images.

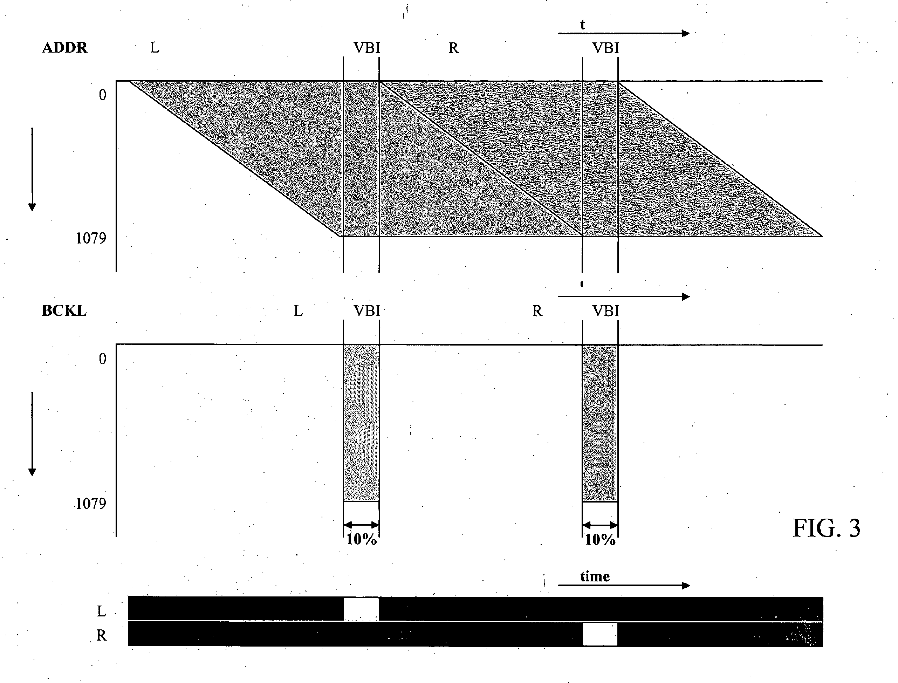

FIG. 3 illustrates an example of the timing of a conventional driving of a field-sequential stereoscopic display. In the example, the stereo-sequential display runs at twice the image rate of the 3D video source, which is typically 60 Hz. This corresponds to a panel addressing and Vertical Blanking Interval (VBI) period of 8.3 ms. In the example, the backlight is switched on or off for the entire image area as a whole, i.e. there is no local variations of the backlight. This reduces cost and is e.g. suitable for mid or low end LCD-TVs.

A video stream may typically be provided to a display system in a sequence of consecutive frames with each frame being represented by a first interval in which the image pixel data is provided serially followed by a period without image data. This time interval is then followed by the image pixel data for the next frame. This timing approach originates from historical CRT displays wherein the time period at the end of the frame was used to return the electron ray to the top of the screen. The time interval without image data is known as the vertical blanking interval (VBI).

A typical field-sequential stereoscopic display may begin to address the pixels of the display starting at line 0 and progressing towards line 1079 as shown in FIG. 3. When line 0 is addressed, i.e. when the transmittance values are transferred to the transmittance elements of line 0, the transmittance elements of this line starts to transition from the value of the previous frame towards the new value. As line 0 is addressed first, the transmittance elements of this line have a relatively long time to perform the transition. The system then proceeds to address line 1 resulting in the transmittance elements thereof beginning the transition. As line 1 is addressed after line 0, the transmittance elements of this line have less time to reach their final value. The system then proceeds one line at a time until the last line (line 1079 in the example) is addressed. Following the addressing of line 1079, all transmittance elements have been set to the transmittance value of the current frame, and the system enters the VBI period. Following the VBI, the process initiates for the next frame by the system addressing line 0 with the transmittance values of the next frame.

Thus, as illustrated, the only duration in which all transmittance values are set to the value for the current frame is during the VBI of the frame. In the example, the backlight is accordingly switched on only during the VBI. Furthermore, the shutter glasses are aligned with the backlight.

However, typically the VBI is only around 10% of the total frame period and accordingly images cannot be rendered for around 90% of the time as both the left and the right images are partially rendered on the transmittance panel at these times. This reduces the potential brightness of the image.

Furthermore, whereas the transmittance elements that are addressed early have a relatively long time to transition towards their desired value, the late addressed transmittance elements only have a very short time to transition towards their desired value. This results in cross talk from previous frames. Reducing the duration of the backlight to provide more time for the transmittance elements to settle reduces the backlight duty cycle and thus reduces the brightness. Furthermore, the duty cycle is already 10% and accordingly does not provide much scope for any reduction. Delaying the backlight-on duration may reduce cross talk for the last addressed lines but will result in an overlap with the addressing of the first lines for the following frame which will consequently introduce cross talk for the first lines of the display.

Thus, there is an inherent trade-off between brightness and cross-talk between images. This is a particularly critical trade-off for field-sequential stereoscopic displays where brightness is already reduced due to the alternating between left eye and right images and where cross-talk is particularly noticeable due to the simultaneous nature of the paired images and the potential high difference between foreground and background objects.

It has been proposed to use an addressing that employs a time base which is not dependent on the input video signal. In such cases, the addressing may be faster than the input data addressing (e.g. using a frame buffer to decouple the addressing time base from the time base of the provided signal) thereby allowing more time for either a longer backlight duration or for settling of the transmittance elements. However, such addressing typically only reduces the addressing time relatively little and therefore tends to only provide a relatively minor improvement. For example, for a 120Hz display, the VBI is typically around 10% of the frame duration, i.e. around 0.8 msecs. Using another time base may typically allow this to be increased to around 2-3 msecs which is less than desired and further requires substantial amounts of frame memory.

In order to improve the transient response of the LC panel and to reduce the cross talk image degradation, the transmittance elements may be driven using an overdrive technique.

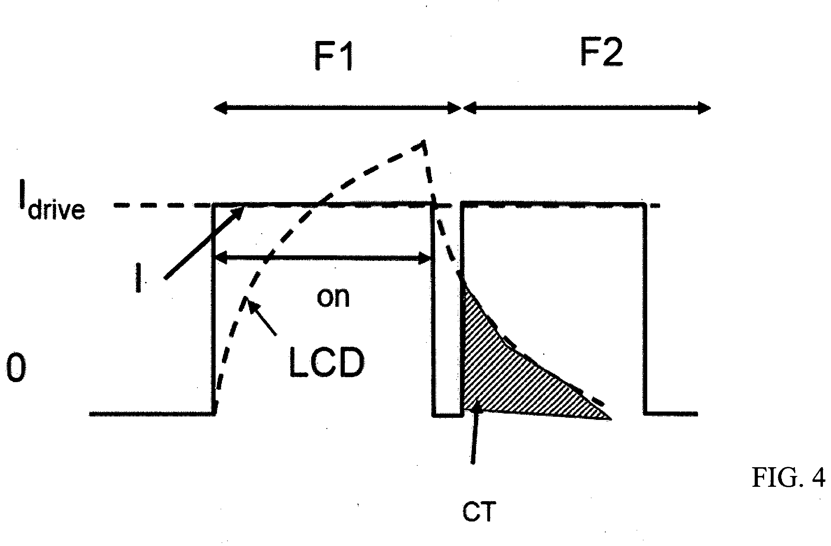

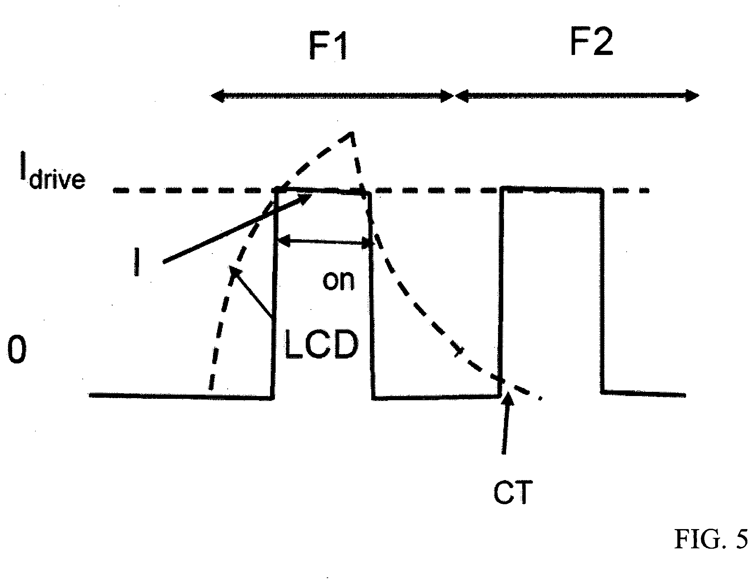

FIGs. 4 and 5 illustrate temporal crosstalk between two frames F1 and F2 for a transmittance element. In frame F1 a very large pulse width is used. The pulse amplitude I for the backlight changes almost immediately. The backlight is thus switched on and off almost instantaneously. However, the transmittance element for a pixel has a start-up time and a dying out time. This means that the intensity of the radiated light is for each transmittance element and in each frame given by the intensity of the backlight and the throughput function (the transmittance) of the transmittance element. The transmittance as a function of time is FIGs. 4 and 5 illustrated by a dashed line denoted LCD. The transmittance drive value for each transmittance element regulates how long the transmittance element pixel transmits lights and when it is closed. The true value for the intensity for each transmittance element and for each frame is given by the convolution of the pulse width modulated backlight and the transparency/transmittance function of the transmittance element. At the beginning of each frame there is a time lag for the LC cell of the transmittance element to become transparent, and it also takes some time for a transmittance element to close. The dotted line provides an example of the transmittance curve for an transmittance element in the form of an LC cell when this opens and closes in the specific circumstance where frame F1 the corresponds to a high drive value, i.e. the LC cell is open almost all of the time, while in the next frame the drive value is zero, i.e. the transmittance of the LC cell should ideally be zero. However, as FIG. 4 illustrates, during at least a part of frame F2 the LC cell is still partially transparent. This leads to a spill over CT, and thus the effective transmittance value in frame F2, has a finite value rather than being zero. The dark pixel accordingly is not black as desired but rather becomes dark grey. Likewise, if the transmittance element should be white (or at least bright) in the next frame, the LC cell would still be partially closed at the start of the frame and the intensity would be lower than desired. Thus, there is a spill-over of intensity for a transmittance element from one frame into the next frame, also called a temporal cross talk effect.

Various measures can reduce this effect. Some of the effects can be avoided by timing the opening and closing of the transmittance elements such that the onset of the opening of the element precedes the onset of the current to the backlight. Also the onset of the opening and closing of the transmittance elements can be timed to reduce cross talk effects. FIG. 5 illustrates such effects for pulse width of for instance 25%. Much of the opening of the transmittance element has been executed prior to the application of the backlight drive signal to switch the backlight on. Similarly, the closing of the transmittance element is started prior to the backlight being switched off. In this case much of the cross talk is reduced. However, an effect remains and can be quite substantial. Indeed, for many typical displays, the transition time for the transmittance elements can be several frame durations.

The cross talk effects in a white pixel can be further reduced or even totally eliminated by adding or reducing the opening time of the transmittance element. This will require that to provide full intensity, the driving data for driving the transmittance element are sometimes increased (if the preceding pixel is dark and thus "darkness" spill over) and sometimes decreased (if the preceding pixel is bright and thus brightness spills over). One way of accomplishing this is to set for a standard situation, for instance a pulse width of 25%, the white level not at the full scale of for instance 256, but setting the white level at for instance 200. The region between 200 and 256 is the overdrive which can be used to increase the level to offset a reduction in brightness due to the fact that, as compared to the standard situation, the preceding pixel has less intensity. To put it simply, a cross talk effect due to the preceding pixel being dark can often be overcome by increasing or adjusting upwards or downwards the opening times of the LCD and using an overdrive. To make room for such adjustments one may set the white level for a standard situation at a value below the maximum to create the possibility of an overdrive. However, too large an overdrive will also have detrimental effects, so not all effects can be overcome. Such measures can also be used to counteract cross talk from a bright pixel into a darker pixel.

Thus, overdrive techniques are used to improve the speed of transition of the transmittance elements. Indeed, if the transmittance elements were driven by a value corresponding to the required transmittance when in a steady state, there is typically insufficient time for the transmittance elements to reach this steady state and therefore the average transmittance value during the backlight-on period will be biased towards the previous transmittance value for the transmittance element. Therefore, in addition to the component corresponding to this steady state transmittance value, the drive value for the transmittance element also comprises a transitional component which results in a faster transition towards the end value. This is achieved by the overdrive component increasing the difference between the previous transmittance value and the current transmittance value. Thus, the overdrive contribution biases the drive value further in the direction of change of the transmittance value. As a result, the steady state transmittance value will be higher than that desired in a steady state scenario for the given backlight and the desired light intensity output. However, due to the transmittance element transitioning during the backlight-on time interval, the transmittance element is not at the final value but is in transition towards this. The overdrive algorithm typically seeks to select the overdrive component such that the average transmittance for the transmittance element during the backlight-on time interval is substantially equal to the desired transmittance value for the backlight (i.e. corresponding to the desired steady state transmittance).

Specifically, the perceived brightness ($L_{pixel}$) of a transmittance element is given as the integral in time of the product of backlight intensity ($L_{BL}$) and LC-transmission ($k_{LC}$).

$$L_{pixel} = \frac{\int^{T_{scan}} L_{BL}(t) \cdot k_{LC}(t) \cdot dt}{T_{frame}}$$

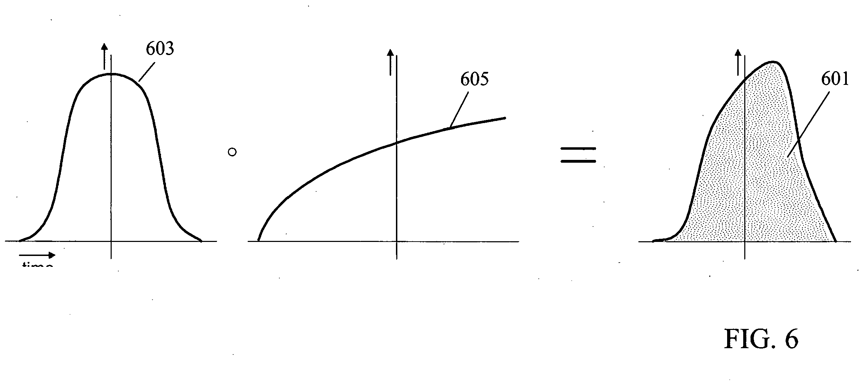

FIG. 6 illustrates an example of the light-output 601 of a transmittance element over time for an exemplary backlight pulse 603 and temporal transmittance curve 605. The perceived brightness is given as the area under the light output curve 601. Overdrive correction seeks to provide an average transmittance value during the backlight-on operation to provide the desired perceived brightness level.

As illustrated in FIG. 4 and 5, a display system may select (frame average) backlight intensities (specifically duty cycle or backlight timing but alternatively or additionally also backlight amplitude) as well as transmittance drive values such that the resulting light output provides the brightness level indicated by the image data for the pixel/transmittance element. The appropriate and desired values will not only depend on the current image data value (and thus the desired brightness) but also on the image value for the previous frame (i.e. it will not only depend on the desired transmittance value but also on the transmittance value from which the transition starts). Generally, a suitable backlight intensity is first determined for one or more backlight segments comprising a plurality of transmittance elements. The transmittance drive values are then determined for the individual transmittance elements.

In the system of FIG. 1, the display driver 103 comprises a receiver 109 which receives a plurality of time sequential frames to be displayed by the display. Each frame corresponds to a frame/two dimensional image to be displayed by the display 101. In the specific example, the frames alternate between an image for the right eye and a corresponding image for the left eye. Thus, the frames are provided in pairs of a right view frame and a left view frame which together form a single three dimensional image. The receiver 109 thus receives the image data defining the images to be displayed. Specifically pixel values are received (each pixel corresponding to a transmittance elements or e.g. for color displays with each transmittance elements corresponding to a sub-pixel).

The image data is fed to a display controller 115 which proceeds to determine backlight intensity values for the backlight and transmittance drive values for the transmittance elements for the time sequential frames based on the image data. The backlight intensity values and the transmittance drive values are generated based on the image data values. Specifically, a relationship between image data values and suitable backlight intensity and transmittance drive values is used to generate suitable values. The relationship is a global relationship and the same relationship is applied to across the display. In particular, the same relationship may be applied to all transmittance elements (of the same primary color) of the display.

The relationship may specifically relate a maximum brightness image pixel values of a group of image pixels corresponding to a backlight segment to a backlight intensity drive value for that backlight segment. The relationship may then relate individual image pixel values to individual transmittance drive values given the determined backlight intensity drive value. The image pixel values may specifically be modified to suitable steady state transmittance values which for the backlight intensity drive value result in the desired light output given by the image data pixel value. The transmittance drive value for that transmittance element may then be generated from the transmittance values. Specifically, the display controller may generate each transmittance drive value from a current transmittance value and a previous transmittance value. In many embodiments, no other inputs may be used to generate the backlight intensity values and transmittance drive values.

The transmittance drive values are generated to provide overdrive functionality. Thus, the transmittance drive values may include both a desired transmittance component (the appropriate steady state value which would result in the desired light output if the transition was instantaneous) as well as an overdrive component. The overdrive component may increase the difference between the previous transmittance value and the desired transmittance value (the steady state value). It will be appreciated that for some transmittance elements, i.e. for some image data combinations the overdrive component may be zero. E.g. if the same pixel value is received for the same transmittance element for a plurality of consecutive frames, the transmittance element will reach its steady state value and thus no overdrive bias will be necessary.

It will be appreciated that different approaches, criteria and principles for determining suitable backlight intensity values and transmittance drive values from image data will be known to the skilled person and that any suitable approach may be used.

Thus, the display controller 115 generates a set of matching backlight intensity values for the backlight segments (or in some cases segment) and transmittance drive values for the transmittance elements which when applied to the display will result in the images of the frames being rendered. Overdrive components are included to reduce cross talk.

The display controller 115 is coupled to the backlight driver 111 which proceeds to generate a drive signal which is fed to the backlight 105 such that this provides the desired backlight intensity. In particular, the backlight drive signal is pulse width modulated to provide a pulse width modulated backlight having the desired backlight intensity. Additionally or alternatively, an amplitude of the drive signal may be changed.

However, in the system of FIG. 1, the determined transmittance drive values are not fed directly to the transmittance panel driver 113 for generation of the drive signals for the transmittance panel 107. Rather, the transmittance drive values are fed to a compensation processor 117 coupled between the display controller 115 and the transmittance panel driver 113. The compensation processor 117 introduces a locally adapted overdrive compensation value to the transmittance drive values to generate compensated transmittance drive values. Thus, the compensation processor 117 modifies the transmittance drive values to provide a spatially differentiated overdrive component. In particular, the compensation processor 117 may introduce a locally adapted overdrive compensation value that reflects a local operating characteristic. The compensation processor 117 may introduce a local compensation which is based on the position of the transmittance element.

Thus, in the system of FIG. 1 a first processing is performed based on the image data to generate suitable transmittance drive values and backlight intensity drive values (specifically duty cycle values). A generic algorithm may be used which can be used on e.g. measurements performed on the display during the design or manufacturing phase. Specifically, the determination of a suitable transmittance drive value for a given backlight intensity drive value may be based on the current image data pixel value and the previous image data pixel value as input to a generic model for a transmittance element. E.g. the performance of LC elements may be characterized during the design phase for a display. Based thereon suitable drive values may be determined which result in the desired light output. The same relationship may then be used for all transmittance elements of the display. The generic values may then be adapted to local characteristics simply by modifying the generated transmittance drive value to provide more or less of an overdrive component. Specifically, a differential value may simply be added or subtracted from the generated transmittance drive value.

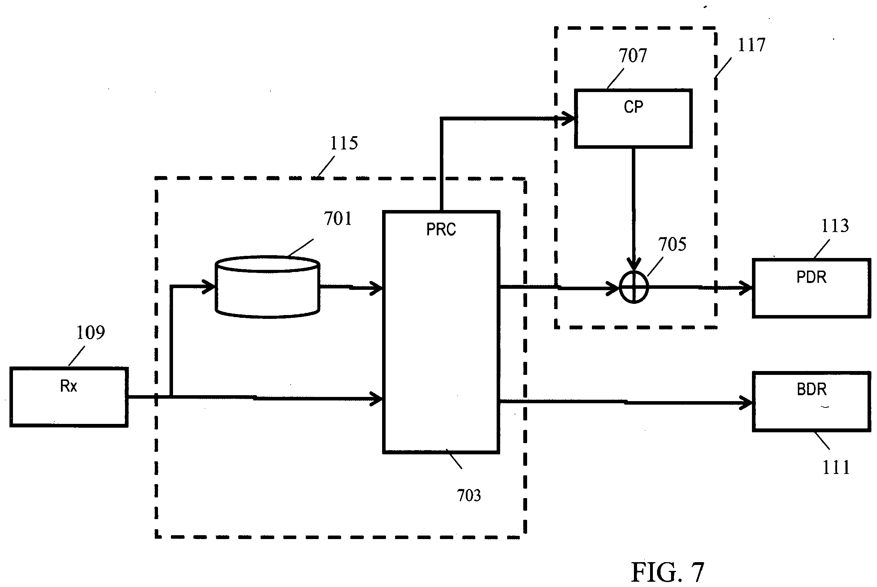

An example of such an approach is illustrated in FIG. 7.

In the example, the display controller 115 comprises a frame memory 701 which stores the input pixel data for each frame. The frame memory 701 is coupled to a processor 703 which is also coupled directly to the receiver 109 and which receives the current pixel value and the previous pixel value. Based on the pixel values, the processor 703 first determines a backlight intensity drive value which in the specific example may be for the entire backlight 105. The backlight may specifically be determined as the lowest brightness value which still allows the brightest pixel in the image to be rendered accurately. Thus, the approach may include backlight dimming for darker images. In some embodiments, a constant backlight intensity drive value may be used, and specifically a constant duty cycle backlight may be used.

The processor 703 typically generates the backlight intensity directly from a consideration of the input pixels of the frame to be displayed. Specifically, for an example where a global backlight is used (corresponding to a single backlight segment), the backlight for the whole display may be generated based on the pixel values of the current frame (and thus not considering the pixel values for previous frames).

In the example, the backlight intensity drive value is directly fed to the backlight driver 111 which directly drives the backlight 105. Specifically, the pulse width and phase of the backlight may be set appropriately. Indeed, in some embodiments, the backlight pulse width and thus the backlight intensity may be kept at a constant value.

Once the backlight intensity level has been determined, the processor 703 proceeds to determine for each transmittance element the appropriate transmittance drive value including both the ideal steady state value and an overdrive component. The values are determined based on the specific backlight intensity drive value previously determined. For example, the pixel values may be scaled with a factor corresponding to the backlight dimming thereby allowing the increased transmittance to compensate for the reduced backlight. The transmittance drive values may for example be determined based on a look-up in a look-up table which defines suitable overdrive contributions. The look-up table may be populated from experiments and measurements performed during the design phase of the display. The operation is performed for each transmittance elements of the pixel using the exact same values, i.e. the look-up table may be a predetermined, fixed and global look-up table which is used for all transmittance elements/ pixels.

The transmittance drive values are fed to an addition unit 705 of the compensation processor 117. The addition unit adds or subtracts a value to the transmittance drive value where the addition or subtraction is a local adaptation value. Thus, rather than a spatially constant value, the system introduces a compensation value which varies for different parts of the display.

The compensation value is generated by a compensation value generator 707 which also receives a signal indicating the generic overdrive value that has been generated by the processor 703. The compensation processor 707 may then determine a modified overdrive component where the modification varies for different parts of the image as will be described in the following. The compensation value generator 707 then provides the modified overdrive component to the addition unit 705 which proceeds to modify the transmittance drive values from the processor 703 in accordance with the modified compensation values.

Thus, the transmittance drive values fed to the display comprise both contributions corresponding to a desired steady state transmittance value and to an overdrive value. Furthermore, the overdrive value includes both a contribution from a generic, global overdrive value as well as a contribution from a localized overdrive compensation value. In some embodiments, the transmittance drive value generated by the display controller and fed to the addition unit 705 may be the summation of the desired steady state transmittance value and the global overdrive value, and the addition unit may be fed a localized overdrive value that amplifies or attenuates (typically scales and/or offsets) the global overdrive value, i.e. in some embodiments the compensated overdrive value may be the summation of the global overdrive value and the local compensation overdrive value. In other embodiments, more advanced overdrive compensations may be performed with specifically the compensated overdrive value being generated as a function of the global overdrive value, where the function has a local dependency or variation.

In some embodiments, the compensation value generator 707 may be arranged to determine the compensation values based on a local operating characteristic for the part of the display to which the transmittance element for which the compensation value is generated belongs. This operational characteristic may for example be determined based on a measurement and/or may be generated by a calculation, estimation or analysis process. In some embodiments, the compensation value may simply be generated as a function of the position in the display of the transmittance elements. For example, the compensation value generator 707 may comprise a look-up-table which has the current row and/or line position of the transmittance element as an input and which in response provides a compensation value.

In some examples, the compensation value for a transmittance element may be determined in response to a local temperature value for the part of the display to which the transmittance element belongs. Thus, the system may provide a locally adapted overdrive value which depends on the local temperature of the display at the corresponding position.

The temporal response for transmittance elements made of e.g. LC material is temperature dependent and overdrive correction and boosting backlight technology may further exacerbate the sensitivity. As the overdrive component of the transmittance drive values is based on the temporal behavior of the transmittance elements, even smaller variations may have significant impact on the accuracy of the overdrive operation. In the system of FIG. 1, the local overdrive compensation may be used to adjust for the display temperature and specifically for temperature variations across the transmittance panel 107.

Typically, when a display (such as e.g. used in a television) is switched on, it initially operates at the ambient temperature of about 20 centigrade. Gradually the internal system temperature will increase and after typically around an hour it will reach a stable operating temperature. The temperature of an LCD-panel typically increases about 15 centigrade. At this temperature the temporal LC-response is significantly faster. For this reason some stereo-sequential LCD displays have a heating element close to the LCD panel in order to provide a faster LC response thereby reducing crosstalk. In some displays, different look-up-tables may be used for different system temperatures, thereby providing more accurate overdrive correction values.

However, in many cases the temperature of different parts of the transmittance panel does not increase by the same amount due to variations in the heating caused by power consumption and cooling due to conductance and radiation etc. Therefore, the temperature of the panel typically varies with time and position. For example: in a local dimming and boosting direct-lit LCD module, steep temperature gradients over a short distance may appear when only a part of the image is very bright and the other part is very dark. The same module might also cool down when the image content turns black for a prolonged period of time. However, a temperature gradient of even a few centigrade may typically result in visible local crosstalk artifacts.

Although a careful thermal design of the display may reduce the problem, this is typically very expensive and cumbersome and still typically does not fully remove the degradation. In the system of FIGs. 1 and 7, the overdrive compensation processor 117 may introduce a local adaptive adjustment of the overdrive correction depending on a local temperature of the transmittance panel.

In some examples, the compensation may be based on the determination of a local operating characteristic in the form of a local temperature value. In particular, the display may be divided into a plurality of regions and the display panel temperature for each of the regions may be determined. For each transmittance element in the region, the compensation processor 117 may accordingly add an overdrive compensation value which depends on the actual determined temperature. Thus, the display controller 115 may generate the transmittance drive values based on a relationship which represents a fixed or assumed operating temperature for the entire transmittance panel 107. The compensation processor 117 can then for each region add or subtract a compensation value based on the local temperature in that region. Thus, if the local temperature is higher than the assumed temperature, the transmittance elements of that region will switch faster than expected and therefore the overdrive component is reduced. However, if the local temperature is lower than the assumed temperature, the transmittance elements of that region will switch slower than expected and therefore the overdrive component is increased.

In some examples, the local temperature value may be derived from a measurement or indeed may be determined directly as a measured temperature. For example, a temperature sensor may be positioned centrally in each region and may provide a temperature measurement of the local temperature.

In some examples, the compensation value generator 707 may be arranged to generate the local temperature by evaluating a thermal model for the display. The thermal model may as an input comprise one or more temperature measurements or may in other embodiments alternatively or additionally be based on e.g. image data.

For example, a display panel may be divided into, say, 16 regions. The display may comprise a single temperature sensor located centrally in the display. The thermal model may reflect the thermal design of the display and may e.g. reflect the thermal conductance of the display panel itself, convection around the panel (e.g. reflect that hot air rises etc). Based on this model a spatial temperature profile may be generated for the display and used to determine the local temperature for the 16 regions. Thus, the local temperature in each region may be seen as a sampled spatial thermal profile.

It will be appreciated that the size of the regions may depend on the requirements and preferences for the individual embodiment. Indeed, in some embodiments, a local temperature may be determined for each transmittance element and thus the overdrive compensation value may be generated for each transmittance element (corresponding to regions of a size of one pixel/transmittance element).

In some examples, the actual power dissipation of the display resulting from the image data may be evaluated. For example, if a long sequence of very dark images has been presented, the backlight intensity will have been low for a long duration and thus the power dissipation will be low. This results in a relatively low display panel temperature. In contrast, if a long sequence of very bright images has been presented, the backlight intensity will have been high for a long duration and thus the power dissipation will be high. This will result in a relatively high display panel temperature. This phenomenon will also apply to parts of the image and thus the temperature will be lower in dark areas than in bright areas if these remain for a sufficiently long time. It will be appreciated that detailed models for the thermal performance of the display can be determined during the design phase typically based on extensive measurements.

Thus, in the system of FIGs. 1 and 7, a spatial temperature gradient might result in a spatial distributed modulation of the overdrive correction to compensate for the variations in the temporal behavior of the transmittance elements as a function of the temperature variations. This will specifically reduce crosstalk and in particular in 3D sequential displays where large brightness variations may occur in areas that are occluded from one viewpoint but not from the other viewpoint.

This may provide improved performance and may avoid the need for expensive components required to implement a thermally optimized design, such as heat pipes, graphite foils, aluminum and copper strips.

In some examples, the compensation processor 117 may be arranged to determine the locally adapted overdrive compensation value in response to a timing offset between a time of driving the transmittance element and a time of switching on the backlight.

In displays with a blinking or pulsed backlight, the driving of the transmittance elements, i.e. the setting of a new transmittance value for the transmittance elements, is typically performed sequentially, and typically on a line by line basis. However, as clearly seen in the example of FIG. 3, this results in the time offset from when a transmittance element is driven until the switch on of the backlight varying across the display. Indeed, in the example of FIG. 3, the delay from a transmittance element is addressed with the new transmittance value until the switch on of the backlight is substantially higher for transmittance elements in line 0 than for transmittance elements in line 1079.

However, since the overdrive correction effectively provides a temporal high-pass filter, compensating for the low-pass response of the LC material, the actual overdrive component is dependent on the timing offset between the driving and the time of switching on the backlight. Indeed, the longer the delay, the closer the transmittance element will be to the final value and thus the smaller the overdrive component should be.

In the system of FIGs. 1 and 7, the locally adapted overdrive compensation value provides a local correction value which reflects the actual delay between driving a transmittance element and switching on the backlight. The exact timing offset will depend on the individual addressing schemes and e.g. on the backlight duty cycle and phase. However, in many embodiments, the display panel is addressed sequentially in line address operations, i.e. one line is addressed at a time starting from the top line and progressing towards lower lines. In such an example (corresponding to the example of FIG. 3), the average time offset may correspond to a line in the center of the display panel, such as e.g. line 539 in the example of FIG. 3. Thus, the relationship used by the display controller 115 to generate the transmittance drive values may be based on an assumed time offset corresponding to the average value. The compensation processor 117 may then introduce an overdrive correction value for each transmission element (or group of transmission elements, such as e.g. a line of transmittance elements) reflecting that difference between the average time offset and the specific time offset for the transmittance element.

E.g. for the example of FIG. 3, transmittance elements of line 0 will have substantially longer than the average time for transitioning towards the final transmittance value and therefore the overdrive component should be reduced, and indeed may even be zero. Thus, the compensation processor 117 adds a compensation value which reduces the amplitude of the overdrive component. It will be appreciated that this can either require either a reduction or an increase of the actual drive value depending on whether the transition is from dark to bright or from bright to dark.

As the system proceeds to address higher numbered lines, the local compensation value is gradually reduced thereby increasing the overdrive contribution until line 539 where the compensation value is zero such that the originally determined overdrive contribution is passed on to the transmittance panel.

At line 540 the compensation value changes sign such that it increases the originally determined overdrive component. This reflects that the transmittance elements now have less than the average time offset in which to transition. The compensation value is then gradually increased for each line until line 1079 where the compensation value provides the maximum increase of the overdrive component.

The system may accordingly provide a low complexity approach for improving the overdrive operation. Indeed, the improvement can be achieved simply by introducing an additional component and without having to modify the data characterizing the transmittance element performance.

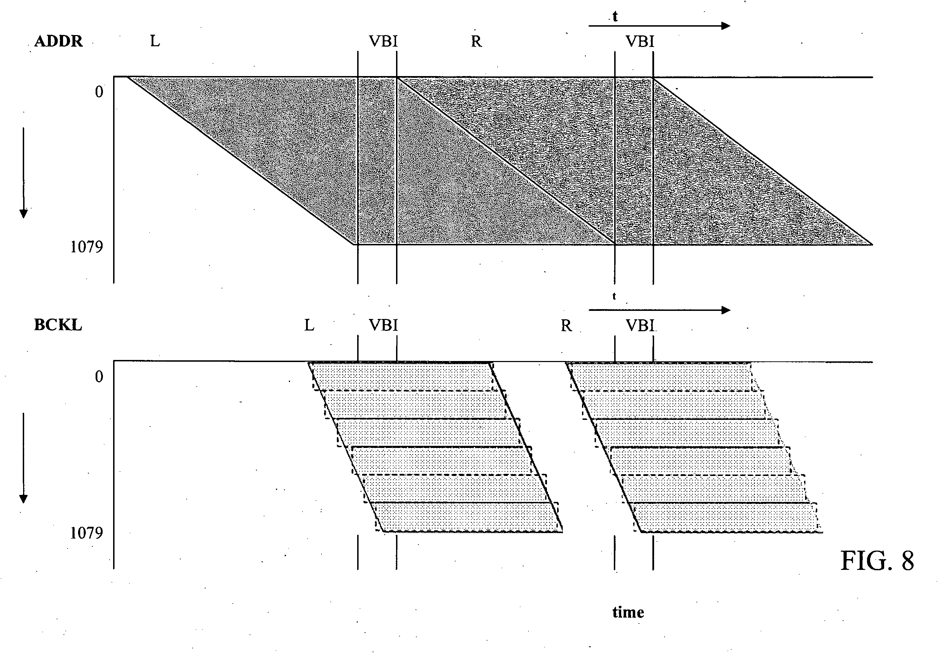

In the example of FIG. 3, the backlight is a single backlight element and thus comprises only one segment. In some embodiments, the backlight may have a plurality of segments which can be individually switched on and off. Furthermore, the backlight may be a scanning backlight in which the segments are switched on and off with a relative time offset. Such a scanning backlight may reduce cross talk by staggering the backlight to more closely follow the timing of the addressing of the transmittance elements across the display. FIG. 8 illustrates an example of a timing of a driving of a field-sequential stereoscopic display corresponding to the example of FIG. 3 but using a scanning backlight. As illustrated backlight segments corresponding to higher line numbers are switched on later than the backlight segments for the lower numbers thereby providing additional time for the transmittance element transition relative to the single backlight of FIG. 3.

However, in the example of a scanning backlight, the compensation processor 117 may still be used to provide an overdrive compensation value which depends on the timing offset between the driving and backlight being switched on for a given transmittance element. Specifically, in this example, the timing offset may correspond to the delay from the driving of a given transmittance element until the backlight segment corresponding to that transmittance element (typically the closest backlight segment) is switched on. In this way the compensation processor 117 can compensate for the variations in the available transition times within each backlight segment. Accordingly, the approach may provide an improved image quality and may reduce cross talk.

It will be appreciated that in these examples, the overdrive compensation for a given transmittance element may simply be determined based on the position (typically the line position but alternatively or additionally the column position) of the transmittance element. Indeed, the compensation value compensator 707 may comprise a look-up-table which as input has the (line) position and as output has the overdrive compensation value to be applied.

In the previous examples, the initial transmittance drive value and backlight intensity drive value were determined based on the input image data for the current and the previous frame or addressing field. However, it will be appreciated that various approaches and algorithms for determining these values can be used. For example, the backlight intensity may first be determined for a backlight segment (which may be the whole display) based on the image data. The backlight may e.g. be determined such that all pixels within the segment can be represented in the steady state without clipping. Thus backlight dimming and/or boosting may be used to adapt the display to the image data. Depending on the backlight setting the pixel image data may be scaled accordingly thereby generating initial non-overdrive transmittance values for the transmittance elements. These transmittance values may then be used to determine the individual overdrive transmittance drive values.

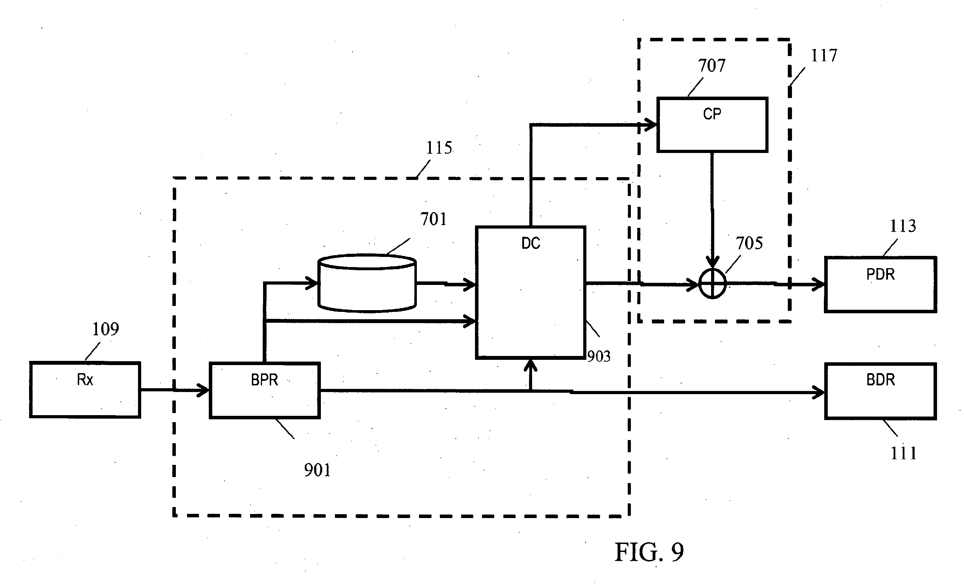

An example of such a system is shown in FIG. 9. In the example, the image data is fed to a backlight processor 901 which determines a backlight intensity drive value for a backlight segment. The backlight processor 901 further compensates the image data for the determined backlight intensity to generate non-overdrive transmittance drive values for the transmittance elements (of the backlight segment). The non-overdrive transmittance drive values are then modified to provide overdrive transmittance drive values based on a global relationship between non-overdrive transmittance drive values and overdrive transmittance drive values. The relationship may be backlight dependent.

In the specific example of FIG. 9, the frame memory 701 is used to store the non-overdrive transmittance drive values such that a look-up table 703 can be provided with the non-overdrive transmittance drive value for the current frame and for the previous frame. The overdrive transmittance drive values are thus determined using information of the desired transmittance value and the desired transmittance value of the previous frame (as well as typically the backlight setting).

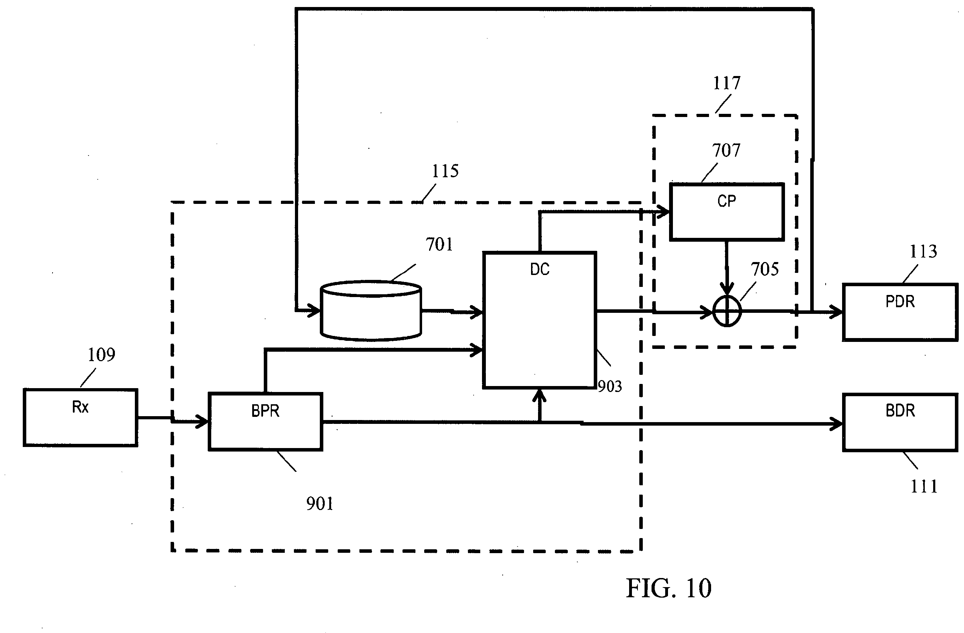

In some examples, the system of FIG. 9 may be modified such that the previous transmittance drive value is not the non-overdrive transmittance drive values but rather is the compensated overdrive transmittance drive value which is fed to the transmittance panel. Such an example is shown in FIG. 10.

Such an approach may provide a more accurate overdrive operation as the compensated transmittance values provide a more accurate indication of the state of the transmittance elements at the end of the previous frame.

In some examples, the system may be arranged to generate a transmittance estimate of the transmittance value of a transmittance elements at the end of a frame (or addressing field) in response to a transmittance drive value for the frame (or addressing field) and a compensated transmittance drive value for the previous field. The transmittance estimate may then be used for determining the overdrive transmittance drive value for the next frame (or addressing field).

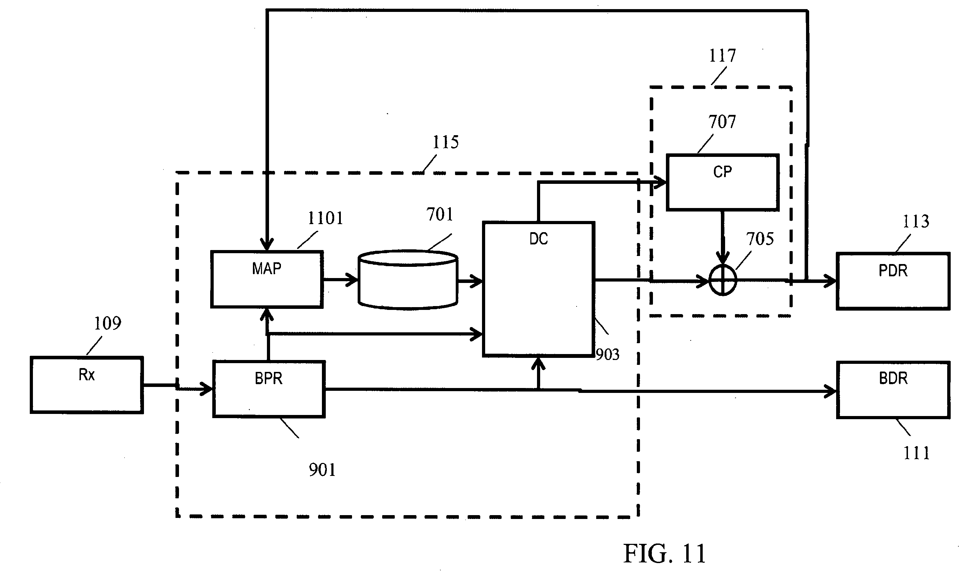

An example of such a system is shown in FIG. 11. In the example, a mapping processor 1101 receives the non-overdrive transmittance drive values as well as the compensated transmittance drive values, and in response determines a transmittance estimate for the transmittance value of the transmittance element at the end of the frame. The estimate is stored in a frame memory 701 and is in the next frame used as the starting transmittance value rather than just using a transmittance drive value. Such a recursive system may provide improved accuracy in setting the overdrive components and may accordingly improve image quality and reduce cross talk.

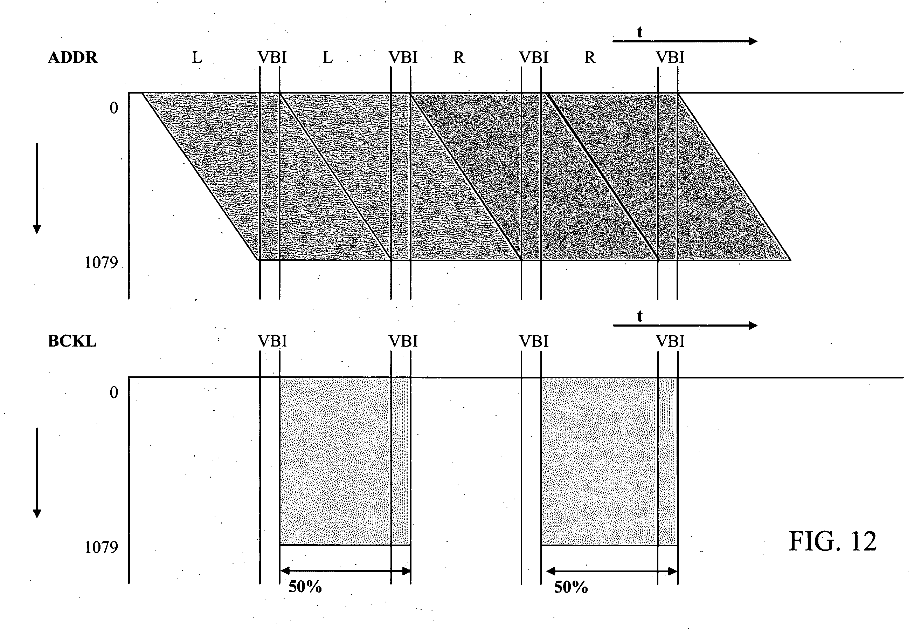

The approach may be particularly suitable for scenarios wherein each frame is addressed multiple times. For example, displays have been developed which drive each transmittance element twice for each frame, i.e. each image frame comprises two addressing fields. For a stereo sequential display, such an addressing method may be referred to as an LLRR addressing wherein the transmittance elements are driven twice with transmittance drive values determined from the left image data and then twice with transmittance drive values determined from the right image data. Such a display may typically run at four times the image rate of the 3D video source, which is typically 60 Hz. This corresponds to a panel addressing and vertical blanking interval (VBI) period of 4.2 ms. The vertical blanking is often about 10% of this period and is now used as settling time for the lines recently address at the bottom of the image. For LCD display systems, a repeated addressing of the image data improves the picture quality, as it enables a faster LC response. During the complete time of the repeated addressing period the backlight can expose the panel by the backlight. An example of such an addressing approach is shown in FIG. 12 which shows two transmission panel drive sequences for each frame.

It should be noted that whereas the second addressing (or drive) sequence may improve the image quality, the first addressing sequence already initiates the transition of the transmittance elements and thus the backlight does not need to wait for the second addressing sequence. Indeed, the backlight is switched on with relation to the first addressing sequence and remains on until a suitable time after the second addressing sequence.

It is possible to address the same transmittance elements with the same data in the two addressing sequences. This may increase the transition time for e.g. LC transmittance elements as a second "refresh" setting tends to increase the transition speed for LC elements (in essence addressing an LC element twice with the same video-data improves the LC response due to the variations of the pixel-capacitor value being compensated by recharging during the second address-cycle).

However, slightly different drive values may be used in the different addressing sequences for the same image. For example, the value of the first addressing sequence may include an overdrive component such that the change in transmittance is emphasized resulting in a faster transition. The second addressing sequence may then provide a value which is closer to the desired value (having less of an overdrive component) to guide the transmittance value closer to the desired value. Thus, the approach may allow overdrive correction to become more accurate as it has double the temporal resolution).

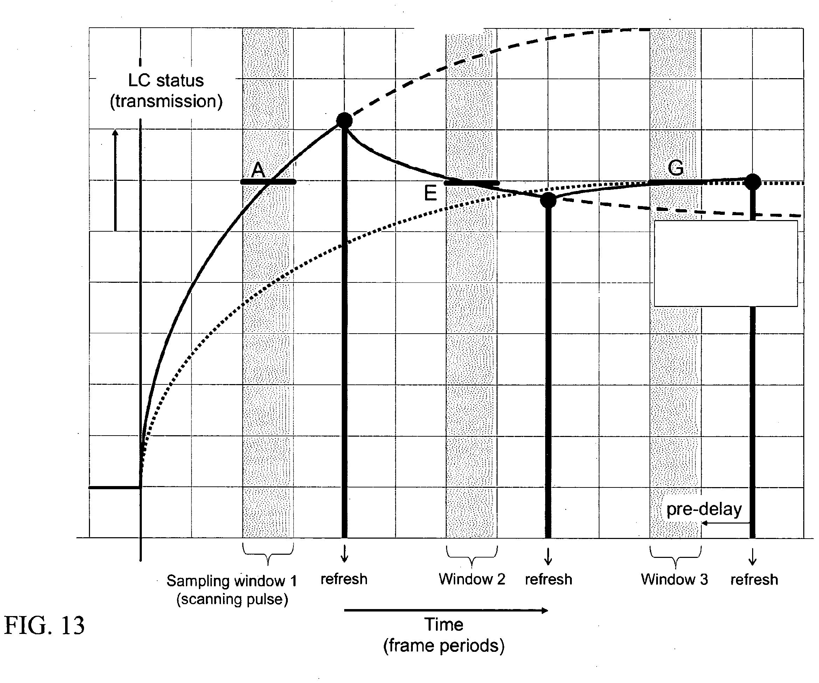

The approaches of FIGs. 10 and 11 are particularly suitable for such systems. In particular, the approach of the system of FIG. 11 is highly advantageous as it allows an accurate estimation of the actual transmittance values of the LC transmittance elements at the end of the first addressing fields thereby allowing the second addressing cycle to provide a much more accurate adjustment. Indeed, the system allows for an overshoot caused by a high overdrive component in the first addressing field to be compensated by a reverse overdrive component in the second addressing field. FIG. 13 illustrates such an example. Thus, the first addressing cycle can be optimized for providing very fast transition whereas the second addressing cycle can then compensate to provide an accurate overall light output for the time of the backlight being on. However, such overdrive manipulation and adjustment is challenging and must be performed accurately. Accordingly, the local adaptation of overdrive components, the consideration of the compensation of the overdrive when determining values in the next frame (or addressing field) and/or the accurate determination of the end transmittance value may substantially improve or facilitate the process.

It will be appreciated that in different embodiments, different approaches for generating the transmittance drive values may be used.

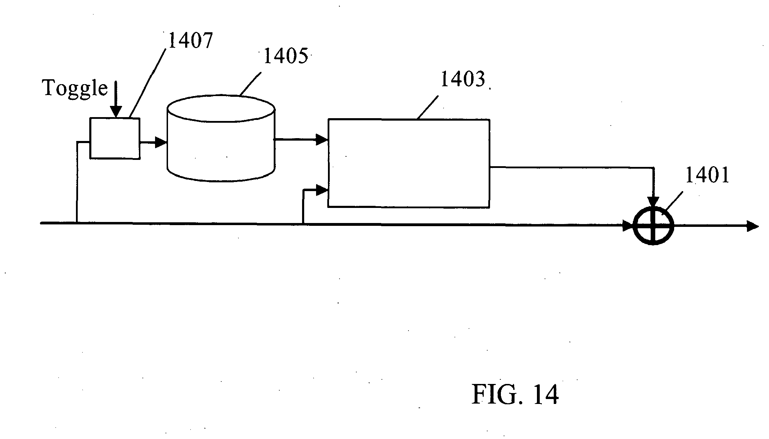

FIG. 14 illustrates an example of an approach for generation of transmittance drive values for a display using a repeated addressing system such as an LLRR addressing approach. In the example, transmittance values corresponding to the desired transmittance component are received e.g. from the backlight processor 901. Thus the transmittance values may be adjusted for the specific backlight intensity.

The transmittance values are fed to a summation unit 1401 which adds an overdrive component to the input transmittance values. The overdrive values are generated from a look-up table 1403 which as an input has the input transmittance values and delayed transmittance values received from a frame memory 1405. The input to the frame memory 1405 corresponds to the input transmittance values but only updated for every other frame/field. This is achieved by use of a gate switch 1407.

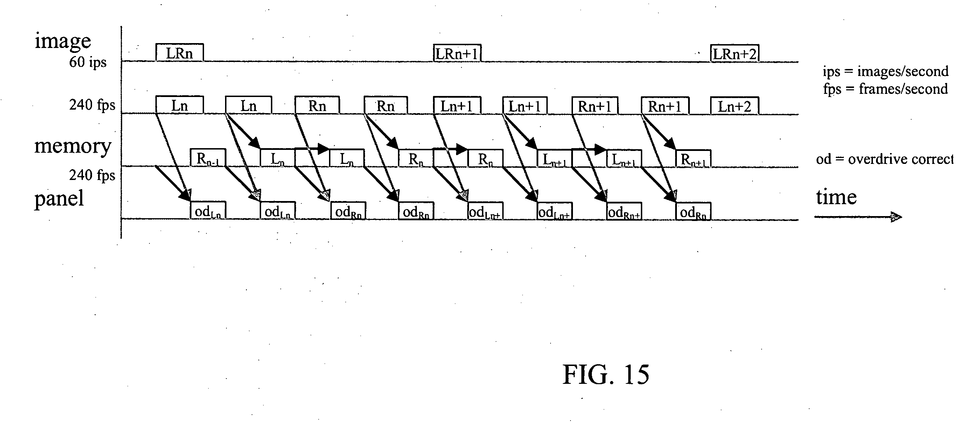

The operation is further illustrated in FIG. 15.

In the example, the overdrive correction of the initial address-cycle is also used in the second address cycle. In this case only the repeated L-field and the repeated R-field are stored in the frame-memory, under control of the gate switch 1407. The overdrive correction data is stored in the overdrive correction look-up table 1403.

The method uses the same overdrive correction-data in two address-cycles to improve the actual LC response. Indeed, halfway through the LC-transition period the subpixels are being recharged thereby compensating for the varying sub-pixel capacity.

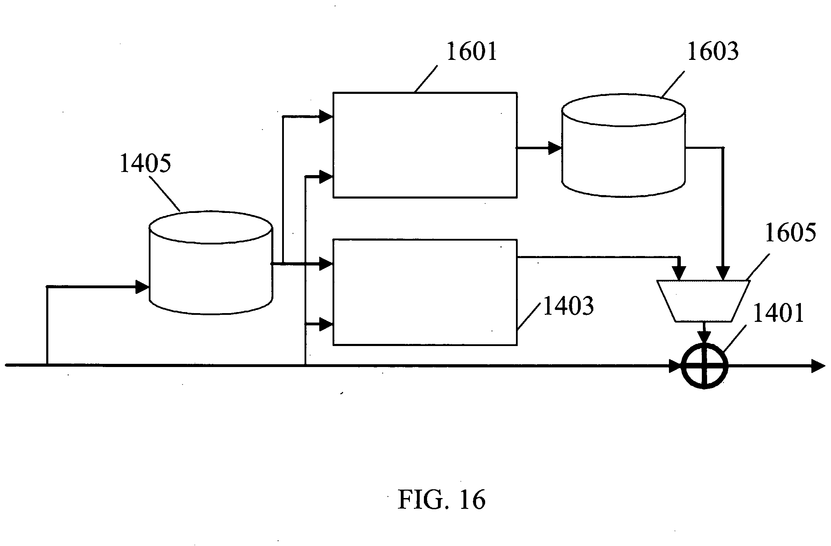

FIG. 16 illustrates another example wherein a second look-up-table 1601 provides different overdrive data for the second addressing cycle than for the first overdrive addressing cycle. The output of the second look-up-table 1601 is stored in a second frame memory 1603 which is coupled to a multiplexer 1605. The multiplexer 1605 switches between the first look-up-table 1403 and the delayed output of the second look-up-table 1601 such that alternative overdrive values are provided for the first and second addressing cycle of each frame.

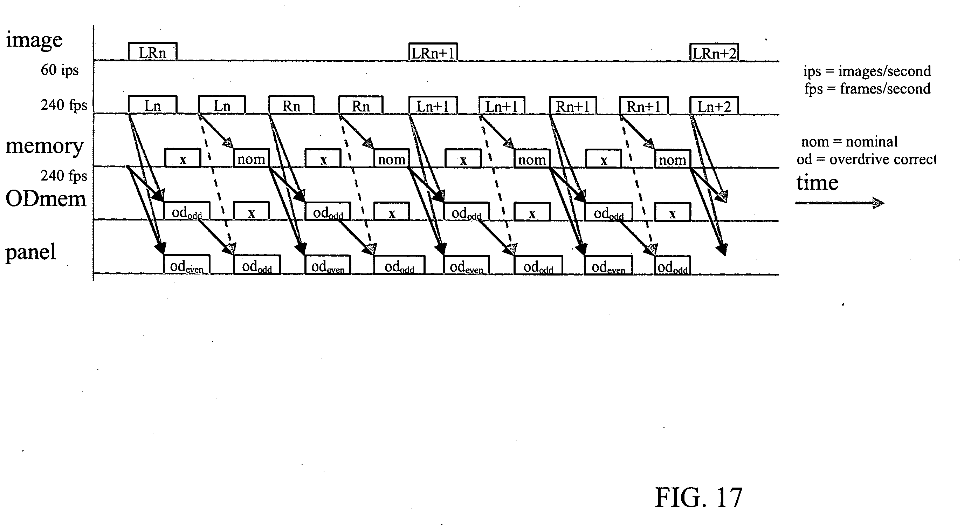

The operation is further illustrated in FIG. 17.

In the first addressing-cycle, the overdrive correction is based upon the image data from the new frame and the image data of the previous frame retrieved from the frame-memory 1405. The overdrive correction look-up table 1403 delivers a first (temporal high-pass) correction on the image-data. When this panel-data is clipping to its upper or lower limit, the transmittance element will not reach its desired end-value in time. The second look-up-table 1601 delivers a second correction on the image-data which is used in the second addressing-cycle.

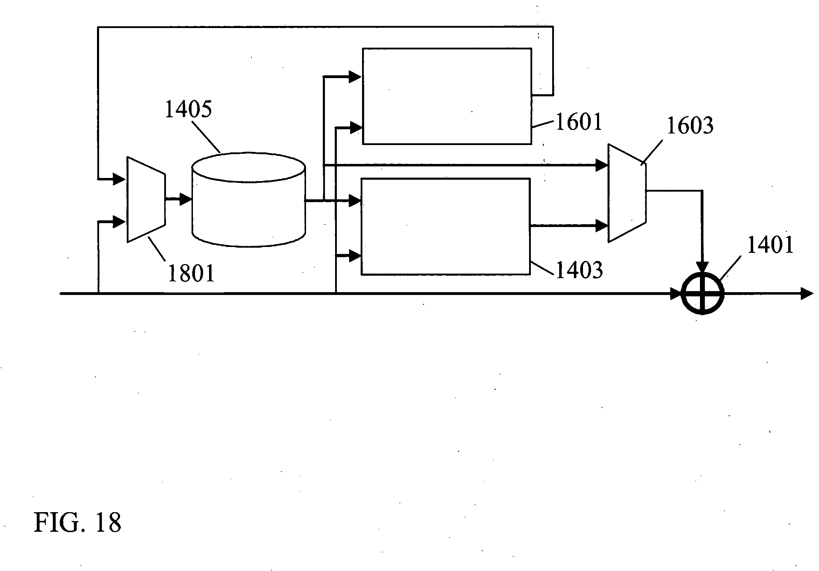

A further example is illustrated in FIG. 18. The example corresponds to that of FIG. 16 except that the two frame memories 1405, 1603 are combined into a single frame memory which alternately stores input data and second addressing cycle compensation data. This is achieved using a second multiplexer 1801.

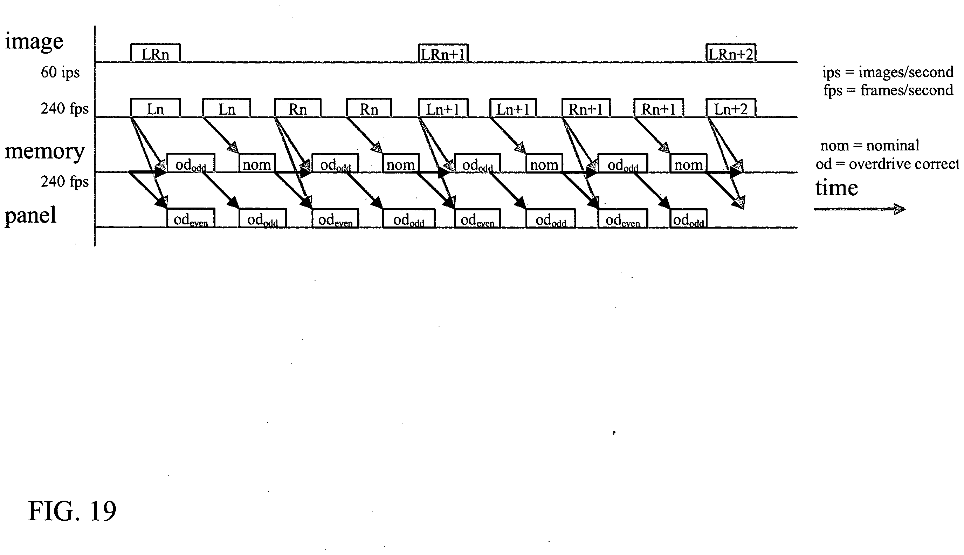

The operation is further illustrated in FIG. 19.

In the first addressing cycle the overdrive correction is based upon the image data of the new frame and the image data of the previous frame retrieved from the frame-memory 1405, 1603. The overdrive correction look-up table 1403 delivers a first (temporal high-pass) correction on the image-data towards the display panel. When this panel-data is clipping to its upper or lower limit, the transmittance element will not reach its desired end-value in time. The overdrive correction look-up table 1601 delivers at the same time a second set of overdrive correction values. This data is stored in the frame-memory 1405, 1603 and used to provide overdrive correction values in the next addressing cycle. When this data is read from the frame-memory 1405, 1603, the repeated image data frame overwrites the overdrive correction data in the frame-memory 1405, 1603 to prepare for the next cycle.

The values of the overdrive correction values of the first and second look-up-tables 1403, 1601 have a relation which can be freely selected such that the perceived picture quality of the display can be optimized and designed for robustness to variations of ambient conditions like e.g. temperature etc.

It will be appreciated that rather than use the input transmittance values, the approaches may use the compensated transmittance values fed to the display panel.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

## Claims

1. A display drive apparatus for driving a display (101) having a backlight 105) and a transmittance panel (107) comprising transmittance elements for modulating the light from the backlight (105), the display drive apparatus comprising:

a receiver (109) for receiving a plurality of time sequential frames to be displayed by the display, a display controller (115) arranged to generate backlight intensity values for the backlight and transmittance drive values for the transmittance elements for the time sequential frames in response to image data for the time sequential frames and a global relationship between image data values and backlight intensity values and transmittance drive values, the transmittance drive values comprising a desired transmittance component and an overdrive component, a compensator (117) for introducing a locally adapted overdrive compensation value to the transmittance drive values to generate compensated transmittance drive values, a backlight driver (111) for driving the backlight (105) in accordance with the backlight intensity values, and a transmittance panel driver (113) for driving the transmittance panel (107) in accordance with the compensated transmittance drives values, **characterized in that** the compensator (117) is arranged to determine the locally adapted overdrive compensation value in response to a display position of a transmittance element for which the locally adapted overdrive compensation value is determined.

2. The display drive apparatus of claim 1, wherein the locally adapted overdrive compensation value is obtainable from a look-up table in response to an input of the display position of the transmittance element for which the locally adapted overdrive compensation value is determined.

## Patentansprüche

1. Anzeigetreibervorrichtung zur Ansteuerung eines Anzeigefeldes (101) mit einem Hintergrundlicht (105) und einem Transmissionsfeld (107), das Transmissionselemente zur Modulation des Hintergrundlichts (105) umfasst, wobei die Anzeigetreibervorrichtung folgendes umfasst:

einen Empfänger (109), der eine Vielzahl zeitlich aufeinanderfolgender Frames empfängt, die durch das Anzeigefeld dargestellt werden, eine Anzeigesteuerung (115), die dazu dient, Hintergrundlichtintensitätswerte für das Hintergrundlicht und Transmissionstreiberwerte für die Transmissionselemente für die zeitlich aufeinanderfolgenden Frames als Antwort auf Bilddaten für die zeitlich aufeinanderfolgenden Frames und eine allgemeine Beziehung zwischen Bilddatenwerten, Hintergrundlichtintensitätswerten und Transmissionstreiberwerten zu erzeugen, wobei die Transmissionstreiberwerte ein gewünschtes Transmissionselement und ein Übersteuerungselement umfassen; einen Kompensator (117) zur Bereitstellung eines lokal angepassten Übersteuerungskompensationswertes in Bezug auf die Transmissionstreiberwerte zur Erzeugung kompensierter Transmissionstreiberwerte, einen Hintergrundlichttreiber (111) zur Ansteuerung des Hintergrundlichts (105) entsprechend den Hintergrundlichtintensitätswerten; und einen Transmissionsfeldtreiber (113) zur Ansteuerung des Transmissionsfeldes (107) entsprechend den kompensierten Transmissionstreiberwerten; **dadurch gekennzeichnet, dass** der Kompensator (117) dazu dient, den lokal angepassten Übersteuerungskompensationswert als Antwort auf eine Anzeigeposition eines Transmissionselements zu bestimmen, für welches der lokal angepasste Übersteuerungskompensationswert bestimmt wird.

2. Anzeigetreibervorrichtung nach Anspruch 1, wobei der lokal angepasste Übersteuerungskompensationswert als Antwort auf eine Eingabe der Anzeigeposition des Transmissionselements, für welches der lokal angepasste Übersteuerungskompensationswert bestimmt wird, aus einer Wertetabelle abgerufen wird.

## Revendications

1. Appareil de commande d'affichage destiné à commander un affichage (101) ayant un rétroéclairage (105) et un panneau de transmission (107) comprenant des éléments de transmission permettant de moduler la lumière provenant du rétroéclairage (105), l'appareil de commande d'affichage comprenant:

un récepteur (109) permettant de recevoir un ensemble de trames séquentielles de temps destinées à être affichées par l'affichage, un régulateur d'affichage (115) réalisé pour permettre de générer des valeurs d'intensité de rétroéclairage pour le rétroéclairage et des valeurs de commande de transmission pour les éléments de transmission, pendant les trames séquentielles de temps en réponse à des données d'image pendant les trames séquentielles de temps, et une relation globale entre les valeurs des données d'image les valeurs de l'intensité du rétroéclairage et les valeurs de commande de la transmission, les valeurs de commande de la transmission comprenant une composante de transmission souhaitée et une composante de surmodulation, un compensateur (117) permettant d'introduire une valeur de compensation de surmodulation localement adaptée dans les valeurs de commande de la transmission pour générer des valeurs de commande de la transmission compensées, un organe de commande de rétroéclairage (111) permettant de commander le rétroéclairage (105) selon les valeurs de l'intensité du rétroéclairage, et un organe de commande du panneau de transmission (113) permettant de commander le panneau de transmission (107) selon les valeurs de commande de la transmission compensées, **caractérisé en ce que** le compensateur (117) est réalisé pour déterminer la valeur de compensation de surmodulation localement adaptée en réponse à la position d'affichage d'un élément de transmission pour lequel la valeur de la transmission de la surmodulation localement adaptée est déterminée.

2. Appareil de commande d'affichage conforme à la revendication 1, dans lequel la valeur de compensation de la surmodulation localement adaptée peut être obtenue à partir d'une table à consulter en réponse à l'entrée de la position d'affichage de l'élément de transmission pour lequel la valeur de compensation de la surmodulation localement adaptée est déterminée.

FIG. 1

EP 2 786 366 B1

$I_{drive}$

on

off

0

FIG. 2

FIG. 3

FIG. 4

EP 2 786 366 B1

FIG. 5

EP 2 786 366 B1

FIG. 6

FIG. 7

EP 2 786 366 B1

ADDR

L        VBI    R       VBI

0

1079

BCKL

L    VBI       R    VBI

0

1079

time

FIG. 8

FIG. 9

FIG. 10

FIG. 11

FIG. 12

FIG. 13

FIG. 14

FIG. 15

image
60 ips
| LRn | | | | | LRn+1 | | | | | LRn+2 |

240 fps
| Ln | Ln | Rn | Rn | Ln+1 | Ln+1 | Rn+1 | Rn+1 | Ln+2 |

memory
240 fps
| $R_{n-1}$ | $L_n$ | $L_n$ | $R_n$ | $R_n$ | $L_{n+1}$ | $L_{n+1}$ | $R_{n+1}$ |

panel
| $od_{Ln}$ | $od_{Ln}$ | $od_{Rn}$ | $od_{Rn}$ | $od_{Ln+}$ | $od_{Ln+}$ | $od_{Rn+}$ | $od_{Rn}$ |

time

ips = images/second
fps = frames/second

od = overdrive correct

EP 2 786 366 B1

EP 2 786 366 B1

FIG. 16

ips = images/second
fps = frames/second

nom = nominal
od = overdrive correct

time

image
60 ips
240 fps

memory
240 fps
ODmem

panel

FIG. 17

FIG. 18

EP 2 786 366 B1

**FIG. 19**

ips = images/second
fps = frames/second

nom = nominal
od = overdrive correct

time

EP 2 786 366 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050122305 A1
- WO 9409475 A1